# EUROPÄISCHE PATENTSCHRIFT

(11) **EP 3 860 149 B1**
(45) Veröffentlichungstag und Bekanntmachung des Hinweises auf die Patenterteilung: **28.06.2023**
(21) Anmeldenummer: 20154693.4
(22) Anmeldetag: 30.01.2020
(51) Int. Cl.: H04R 3/00, H04M 1/58

(54) **SPRACHENDGERÄT, NETZWERK UND VERFAHREN ZUR REGELUNG DER SPRECHLAUTSTÄRKE**
VOICE TERMINAL, NETWORK AND METHOD FOR CONTROLLING SPEECH VOLUME
APPAREIL VOCAL, RÉSEAU ET PROCÉDÉ DE RÉGULATION DU VOLUME DE HAUT-PARLEUR

(43) Veröffentlichungstag der Anmeldung: 04.08.2021
(73) Patentinhaber: Fraunhofer-Gesellschaft zur Förderung der angewandten Forschung e.V., 80686 München (DE)
(72) Erfinder: Liebl, Andreas, 70569 Stuttgart (DE); Müller, Benjamin, 70569 Stuttgart (DE)
(74) Vertreter: Friese Goeden Patentanwälte PartGmbB

(56) Entgegenhaltungen:
- WO-A1-99/11047
- AU-B2- 645 860
- US-A1- 2019 306 608
- US-B1- 7 881 927

## Beschreibung

Die Erfindung betrifft ein Netzwerk einer Mehrzahl von Sprachendgeräten mit zumindest einem ersten Mikrofon und zumindest einem zweiten Mikrofon und zumindest einem ersten Lautsprecher und einem Echopfadverstärker mit einem Eingang und einem Ausgang, wobei das erste Mikrofon mit dem Eingang des Echopfadverstärkers verbunden ist und der Lautsprecher mit dem Ausgang des Echopfadverstärkers verbunden ist. Weiterhin betrifft die Erfindung ein Verfahren zur Regelung der Sprechlautstärke eines Benutzers eines Sprachendgerätes.

Aus der AU 645 860 B2 ist ein Verfahren zum automatischen Einstellen des Pegels empfangener Sprachsignale bekannt. Hierzu werden übertragene Sprachsignale und Umgebungsgeräuschsignale detektiert und ein Freigabesignal erzeugt, wenn in Abwesenheit von übertragenen Sprachsignalen die Umgebungsgeräuschsignale einen vorbestimmten Schwellenwert überschreiten. Schließlich wird eine Verstärkungssteuereinrichtung angesteuert, um die Empfangsverstärkungseinrichtung und die Nebentonverstärkungseinrichtung einzustellen, so dass der Empfangssprachsignalpegel erhöht und der Pegel des Nebentonsignals in einem vorbestimmten Verhältnis verringert wird.

Die WO 99/11047 A1 offenbart ein Verfahren zum Einstellen eines Hörer-Mithörtons in einem Sprachendgerät. Der gemessene Umgebungsgeräuschpegel des Handgerätmikrofonsignals wird mit einem vorbestimmten Schwellenwert verglichen. Der Mithörtonpegel wird als Reaktion darauf, ob der am Handapparatmikrofon empfangene gemessene Umgebungsgeräuschpegel höher oder niedriger als der vorbestimmte Schwellenwert ist, um einen vorbestimmten Betrag eingestellt.

Die US 7,881,927 B1 zeigt Systeme und Verfahren für einen adaptiven Nebenton- und adaptiven Sprachaktivitätserkennungs-(VAD)-Schwellenwert für die Sprachverarbeitung. Das VAD-System umfasst im Allgemeinen einen adaptiven VAD-Schwellenwertgenerator, der konfiguriert ist, um einen VAD-Schwellenwert basierend auf einem Anstieg des Sprachpegels zu erzeugen, der aus einer Mithörtondämpfung resultiert, und einen Komparator zum Vergleichen empfangener Signale mit dem adaptiven VAD-Schwellenwert, um das Vorhandensein von Sprachaktivität zu bestimmen.

Aus der US 2019/306608 A1 offenbart ein Verfahren, bei welchem ein Eingangssignals empfangen wird, welches Umgebungsaudio repräsentiert. Das Eingangssignal wird an einem oder mehreren Mikrofonen eines Headsets abgenommen. Wird in den Umgebungsgeräuschen eine Sprachaktivität festgestellt, welche in dem Eingangssignal eine Schwellenbedingung erfüllt, wird ein Steuersignal erzeugt, welches bewirkt, dass die Mithörton-Erzeugungsschaltung Mithörtonsignale erzeugt und über einen akustischen Wandler des Headsets ausgibt.

Aus der EP 1 806 840 A1 ist ein Sprachendgerät mit zumindest einem ersten Mikrofon und zumindest einem ersten Lautsprecher bekannt. Sofern ein Benutzer des Sprachendgerätes ein Gespräch mit einem entfernten Teilnehmer des Kommunikationsnetzes führt, kann er über den ersten Lautsprecher seinen Gesprächspartner hören und über das erste Mikrofon selbst sprechen. Weiterhin ist bekannt, das Signal des ersten Mikrofons über einen Echopfadverstärker auf einen vorgebbaren Pegel zu verstärken und über den ersten Lautsprecher wiederzugeben. Der Benutzer hört somit über den ersten Lautsprecher auch das, was er gerade in das erste Mikrofon spricht. Die Verstärkung des Echopfadverstärkers ist exponentiell oder überproportional zum Pegel des ersten Mikrofons. Je lauter der Benutzer in das erste Mikrofon spricht, um so lauter hört er sich selbst im ersten Lautsprecher. Dies soll durch Ausnutzung des Fletcher-Effekts vermeiden, dass der Benutzer zu laut spricht und damit weitere Personen im selben Raum stört.

Dieses bekannte Sprachendgerät weist den Nachteil auf, dass die erzwungene Reduktion der Sprechlautstärke vom Benutzer als Eingriff in die persönliche Freiheit wahrgenommen wird und potentiell Reaktanz und Ablehnung erzeugt. Da die Verstärkung des Echopfadverstärkers zwar nichtlinear verläuft, jedoch fest vorgegeben ist, kann nicht gewährleistet werden, dass der Eingriff stets nur im unbedingt erforderlichen Maß und für den Benutzer unmerklich erfolgt.

Ausgehend von dem bekannten Sprachendgerät liegt der Erfindung somit die Aufgabe zugrunde, ein Sprachendgerät, ein Telekommunikationsnetzwerk und ein Verfahren zu dessen Verwendung anzugeben, bei welchem die Störung weiterer Personen im selben Raum reduziert oder ausgeschlossen und die Benutzerakzeptanz erhöht ist.

Die Aufgabe wird erfindungsgemäß durch ein Netzwerk gemäß Anspruch 1 und ein Verfahren nach Anspruch 6 gelöst. Vorteilhafte Weiterbildungen der Erfindung finden sich in den Unteransprüchen.

Erfindungsgemäß wird ein Sprachendgerät mit zumindest einem ersten Mikrofon und zumindest einem ersten Lautsprecher verwendet. Das Sprachendgerät kann als physisches Gerät ausgestaltet sein, beispielsweise in Form eines an sich bekannten Schreibtisch- oder Schnurlostelefons. In anderen Ausführungsformen der Erfindung kann das Sprachendgerät eine Software enthalten oder daraus bestehen, welche auf einem Mikroprozessor ausgeführt wird und die für das Sprachendgerät notwendigen Funktionen ausführt. Diese Software kann beispielsweise auf einem handelsüblichen PC ausgeführt werden.

Das Sprachendgerät enthält zumindest ein erstes Mikrofon und zumindest einen ersten Lautsprecher, welche beispielsweise in einem Hörer oder einem Headset integriert sein können. Das erste Mikrofon ist dazu eingerichtet, die Sprache eines Benutzers aufzuzeichnen und das so erzeugte Sprachsignal über ein analoges oder digitales Telefonnetz zu einem entfernten Gesprächspartner zu übertragen. In gleicher Weise ist der erste Lautsprecher dazu vorgesehen, das Sprachsignal des entfernten Gesprächspartners dem Benutzer des Sprachendgerätes wiederzugeben.

Weiterhin enthält das vorgeschlagene Sprachendgerät einen Echopfadverstärker mit zumindest einem ersten Eingang und zumindest einem ersten Ausgang, wobei das Mikrofon mit dem Eingang des Echopfadverstärkers verbunden ist und der Lautsprecher mit dem Ausgang des Echopfadverstärkers verbunden ist. Dieses Merkmal hat die Wirkung, dass das Signal des ersten Mikrofons über den Echopfadverstärker auf einen vorgebbaren Pegel verstärkt oder abgeschwächt und über den ersten Lautsprecher ausgegeben wird. Der Benutzer des Sprachendgerätes hört somit über den ersten Lautsprecher nicht nur die Sprache des entfernten Gesprächspartners sondern auch das, was er gerade in das erste Mikrofon spricht.

Erfindungsgemäß wird nun vorgeschlagen, dass der Echopfadverstärker eine variable Verstärkung aufweist. Die Verstärkung kann beispielsweise stufenlos zwischen einem Minimal- und einem Maximalwert variiert werden. In anderen Ausführungsformen kann die Verstärkung in mehreren Stufen variiert werden, beispielsweise können mehr als 3 oder mehr als 5 oder mehr als 10 oder mehr als 128 oder mehr als 256 Stufen der Verstärkung zur Verfügung stehen. Die Maximalzahl der Verstärkungsstufen kann geringer sein als etwa 20 oder geringer als 128 oder geringer als 256 oder geringer als 512. Je höher die Verstärkung des Echopfadverstärkers ist, umso lauter wird das, was der Benutzer des Sprachendgerätes in das erste Mikrofon spricht, über den ersten Lautsprecher wiedergegeben.

Weiterhin weist das Sprachendgerät zumindest eine Einrichtung zur Bestimmung der Verstärkung auf. Diese kann als analoge oder digitale Schaltung realisiert sein oder in Form einer Software, welche auf einem Mikroprozessor des Sprachendgerätes ausgeführt wird. Die Einrichtung zur Bestimmung der Verstärkung ist dazu eingerichtet, die variable Verstärkung des Echopfadverstärkers in Abhängigkeit der Umgebungslautstärke zu verändern. Die Erfindung beruht auf dem Grundprinzip, dass ein Sprecher die eigene Sprechlautstärke intuitiv in dem Maß anpasst, dass er in Abhängigkeit des Umgebungsgeräusches gut verstanden wird. Durch die Rückkopplung der eigenen Sprechlautstärke in den ersten Lautsprecher kann somit die Sprechlautstärke des Benutzers reduziert werden. Anders als im Stand der Technik, wird die Verstärkung jedoch in Abhängigkeit der Umgebungslautstärke variiert, d.h. eine hohe Verstärkungsstufe, welche vom Benutzer als unangenehm empfunden wird und ihn zur Mäßigung seiner Sprechlautstärke animiert, wird nur dann gewählt, wenn die vom Benutzer des Sprachendgerätes erzeugte Lautstärke in seiner Umgebung auch für andere Personen im selben Raum störend empfunden wird. Anders als bei bekannten Sprachendgeräten wird der als unangenehm empfundene Eingriff in das persönliche Verhalten sowohl zeitlich als auch im Umfang minimiert, so dass die Akzeptanz beim Benutzer ansteigt.

Erfindungsgemäß enthält das Sprachendgerät zumindest ein zweites Mikrofon, welches dazu eingerichtet ist, die Umgebungslautstärke zu erfassen. In einigen Ausführungsformen der Erfindung kann das zweite Mikrofon nicht im Hörer eines Telefons sondern im Tischgehäuse integriert sein und auch als Freisprechmikrofon verwendet werden. Dieses zweite Mikrofon nimmt aufgrund des größeren Abstandes zu einem den Hörer in der Hand haltenden Benutzer die Sprache des Benutzers nur in reduzierter Lautstärke auf. Ergibt sich hierbei noch ein störender Pegel der Sprechlautstärke, kann darauf geschlossen werden, dass der Benutzer des Sprachendgerätes zu laut spricht, so dass die Verstärkung des Echopfadverstärkers zur Reduktion der Sprechlautstärke angehoben werden kann.

In einigen Ausführungsformen der Erfindung kann das Sprachendgerät zumindest einen Eingang aufweisen, über welchen ein die Umgebungslautstärke repräsentierendes Signal zuführbar ist. In diesem Fall kann das die Umgebungslautstärke repräsentierende Signal durch ein externes Mikrofon aufgenommen werden, welches die Umgebungslautstärke im Raum erfasst, beispielsweise in einem Großraumbüro. Bei Verwendung einer Mehrzahl von Mikrofonen kann die Verteilung des Schallfeldes im Raum bestimmt werden, so dass mit noch größerer Genauigkeit erfasst werden kann, ob ein Benutzer eines Sprachendgerätes so laut spricht, dass dies zur Störung der übrigen anwesenden Personen im Raum führt, so dass gezielt die Verstärkung des Echopfadverstärkers des betroffenen Benutzers angehoben werden kann. In diesen Ausführungsformen der Erfindung kann das externe Mikrofon in einem passiven, d.h. derzeit ungenutzten Telefon integriert sein oder aber in einem Schallschirm, einem Monitor oder einem beliebigen Büroinventar.

In einigen Ausführungsformen der Erfindung können zur Erfassung der Umgebungslautstärke die zweiten Mikrofone aller im Raum befindlichen Sprachendgeräte oder zumindest eines weiteren Sprachendgerätes verwendet werden. Das weitere Sprachendgerät im Sinne dieser Beschreibung ist verschieden von demjenigen Sprachendgerät, dessen Echopfadverstärker beeinflusst werden soll. Dies hat den Vorteil, dass auf zusätzliche Hardware, welche der Installation und Wartung bedarf, verzichtet werden kann.

In einigen Ausführungsformen der Erfindung kann die Einrichtung zur Bestimmung der Verstärkung dazu eingerichtet sein, die Umgebungslautstärke als Summe eines Grundgeräusches und eines Korrekturwertes zu erfassen. Weiter kann die Einrichtung zur Bestimmung der Verstärkung dazu eingerichtet sein, die variable Verstärkung des Verstärkers so einzustellen, dass der Korrekturwert unterhalb eines optionalen ersten Grenzwertes liegt. Optional kann die Einrichtung zur Bestimmung der Verstärkung zusätzlich oder alternativ dazu eingerichtet sein, die variable Verstärkung des Verstärkers so einzustellen, dass die Umgebungslautstärke unterhalb eines vorgebbaren zweiten Grenzwertes liegt. Auf diese Weise kann die Belastung durch den im Raum vorhandenen Schallpegel weiter reduziert werden. Darüber hinaus wird die Lautstärke eines informationshaltigen und damit potentiell störenden Gespräches durch Berücksichtigung des Korrekturwertes zusätzlich reduziert. Eine solche Ausführung der Erfindung ist vorteilhaft, weil Gespräche aufgrund ihres Informationsgehaltes zum unwillkürlichen und unerwünschten Mithören anregen und daher bereits bei viel geringerer Lautstärke störend empfunden werden als nicht-informationshaltige Geräusche wie beispielsweise Kopierer oder andere elektrische oder elektronische Geräte.

In einigen Ausführungsformen der Erfindung kann der vorgebbare erste Grenzwert kleiner oder gleich 3 dB oder kleiner oder gleich 2 dB sein. Dies bedeutet, dass die Sprechlautstärke des Benutzers des Sprachendgerätes am Ort eines unbeteiligten Zuhörers soweit reduziert ist, dass diese nicht mehr zum unerwünschten Mithören anregt und somit nicht mehr störend empfunden wird.

In einigen Ausführungsformen der Erfindung kann der vorgebbare zweite Grenzwert kleiner 55 dB sein. Ein geringerer Gesamtpegel des Umgebungsgeräusches kann dazu geeignet sein, die Leistungsfähigkeit der in einem Büro anwesenden Personen zu erhöhen.

In einigen Ausführungsformen der Erfindung kann die Einrichtung zur Bestimmung der Verstärkung dazu eingerichtet sein, das Grundgeräusch als A-bewerteten und fast-bewerteten energie-äquivalenten Dauerpegel nach DIN 61672-1 zu bestimmen. Unter einem fast-bewerteten Pegel wird dabei eine Integration des vom Mikrofon aufgenommenen Messsignals mit einer Zeitkonstante von 125 ms verstanden. Auf das so bestimmte Grundgeräusch wird nachfolgend der Korrekturwert addiert, um erfindungsgemäß die Umgebungslautstärke zu erhalten. Dieser Korrekturwert berücksichtigt die Informationshaltigkeit eines Telefongespräches, welches somit unabhängig von seinem absoluten Schallpegel von Unbeteiligten als besonders störend empfunden wird.

In einigen Ausführungsformen der Erfindung wird der Korrekturwert als Differenz des A-bewerteten und Impuls-bewerteten Messwertes und des A-bewerteten und fast-bewerteten Messwertes bestimmt. Unter einem Impuls-bewerteten Messwert wird dabei ein Messwert verstanden, welcher mit einer Zeitkonstante für den Pegelanstieg von 35 ms und einer Zeitkonstante für den Pegelabfall von 1,5 s integriert wird.

In anderen Ausführungsformen der Erfindung kann als Korrekturwert die Differenz zwischen den Perzentilpegeln P₉₀ und P₁₀ verwendet werden. Unter einem Perzentilpegel wird im Sinne der vorliegenden Beschreibung der Pegel verstanden, der 10 Prozent der Zeit anliegt bzw. der Pegel, der 90 Prozent der Zeit anliegt. Auch die Perzentilpegel stellen somit ein Maß für das Impuls- und das Grundgeräusch dar.

Die erfindungsgemäß vorgeschlagene Bestimmung des Umgebungsgeräusches orientiert sich somit am Beurteilungspegel nach DIN EN 61672-1. Die Addition eines Korrekturwertes für den Informationsgehalt eines Geräusches ist in der Praxis jedoch schwierig, da ein solcher Korrekturfaktor stets subjektiv vergeben wird und damit einer fortlaufenden automatisierten Bestimmung entzogen ist. Völlig überraschend wurde erkannt, dass es ausreichend ist, den Korrekturwert aus der Impulshaltigkeit des eintreffenden Schallereignisses zu bestimmen. Obwohl damit keinerlei Bestimmung des Informationsgehaltes verbunden ist, werden gleichwohl gute Ergebnisse bei der Bestimmung der variablen Verstärkung des Echopfadverstärkers erreicht, so dass eine effektive Reduzierung der Sprechlautstärke eines Benutzers eines Sprachendgerätes erfolgt.

In anderen Ausführungsformen der Erfindung kann als Korrekturwert der "Speech Intelligibility Index" (SII) nach ANSI, S3.5, 1997 verwendet werden. Hierbei handelt es sich um ein Maß, das den Sprachschallpegel unter Berücksichtigung der für das Sprachverstehen relevanten Frequenzbänder quantifiziert. Um Hintergrundsprechen unverständlich zu machen und damit das Störpotential zu reduzieren, kann ein SII kleiner als 0.5 oder kleiner als 0.2 als Zielgröße gewählt werden.

In wiederum einer anderen Ausführungsform der Erfindung kann als Korrekturwert der psychoakustische Parameter der Schwankungsstärke verwendet werden. Hierbei handelt es sich um ein Maß, das die Variabilität eines Schallsignales erfasst, welche wiederum für das Störpotential verantwortlich ist.

In einigen Ausführungsformen der Erfindung kann der Korrekturwert aus einer Kombination der vorstehend genannten Ausführungsformen eingesetzt werden.

In einigen Ausführungsformen der Erfindung können eine Mehrzahl von Sprachendgeräten zu einem Netzwerk zusammengeschaltet werden. Beispielsweise können in einem Großraumbüro mit einer Mehrzahl von Arbeitsplätzen mehr als 2 oder mehr als 5 oder mehr als 10 oder mehr als 30 Sprachendgeräte miteinander verbunden werden. Die Verbindung kann über eine analoge oder digitale Verbindung erfolgen. Die Verbindung kann drahtlos über eine Funkschnittstelle oder über einen Lichtwellenleiter oder eine galvanische Verbindung erfolgen. Das Netzwerk kann einerseits dazu eingerichtet sein, die Sprachendgeräte mit einer Telefonzentrale zu verbinden, welche die Gesprächsweiterleitung und die Anschaltung an eine Amtsleitung übernimmt. Darüber hinaus kann das Netzwerk dazu eingerichtet sein, von zumindest einem zweiten Mikrofon aufgenommene Messwerte der Umgebungslautstärke weiterzuleiten und diese insbesondere einem in Benutzung befindlichen Sprachendgerät zur Bestimmung der variablen Verstärkung des Echopfadverstärkers bereitzustellen.

Hierzu kann das Netzwerk zumindest zeitweise zumindest ein aktives Sprachendgerät und zumindest ein passives Sprachendgerät enthalten, wobei das aktive Sprachendgerät dazu eingerichtet ist, dass die variable Verstärkung des Echopfadverstärkers verändert wird und das passive Sprachendgerät dazu eingerichtet ist, mit zumindest dem zweiten Mikrofon die Umgebungslautstärke zu erfassen. Die Umgebungslautstärke wird somit in unmittelbarer Umgebung des unbeteiligten Benutzers erfasst, welcher von dem am aktiven Sprachendgerät geführten Gespräch belästigt werden kann. Sofern das zweite Mikrofon am passiven Sprachendgerät eine störende Umgebungslautstärke erfasst, kann die Verstärkung des Echopfadverstärkers des aktiven Gerätes so lange angehoben werden, bis am passiven Gerät der Korrekturwert unterhalb eines vorgebbaren ersten Grenzwertes und/oder die Umgebungslautstärke unterhalb eines vorgebbaren zweiten Grenzwertes liegt. Die Erfindung nutzt dabei den Fletcher-Effekt, welcher dazu führt, dass der Benutzer des aktiven Sprachendgerätes umso leiser spricht, je lauter ihm die eigene Stimme über den ersten Lautsprecher zurückgemeldet wird.

Nachfolgend soll die Erfindung anhand von Figuren ohne Beschränkung des allgemeinen Erfindungsgedankens näher erläutert werden. Dabei zeigt
Figur 1 ein Blockschaltbild eines erfindungsgemäßen Sprachendgerätes.
Figur 2 zeigt eine schematische Darstellung eines erfindungsgemäßen Netzwerkes.
Figur 3 erläutert die Funktionsweise des erfindungsgemäßen Verfahrens anhand eines Ausführungsbeispiels.

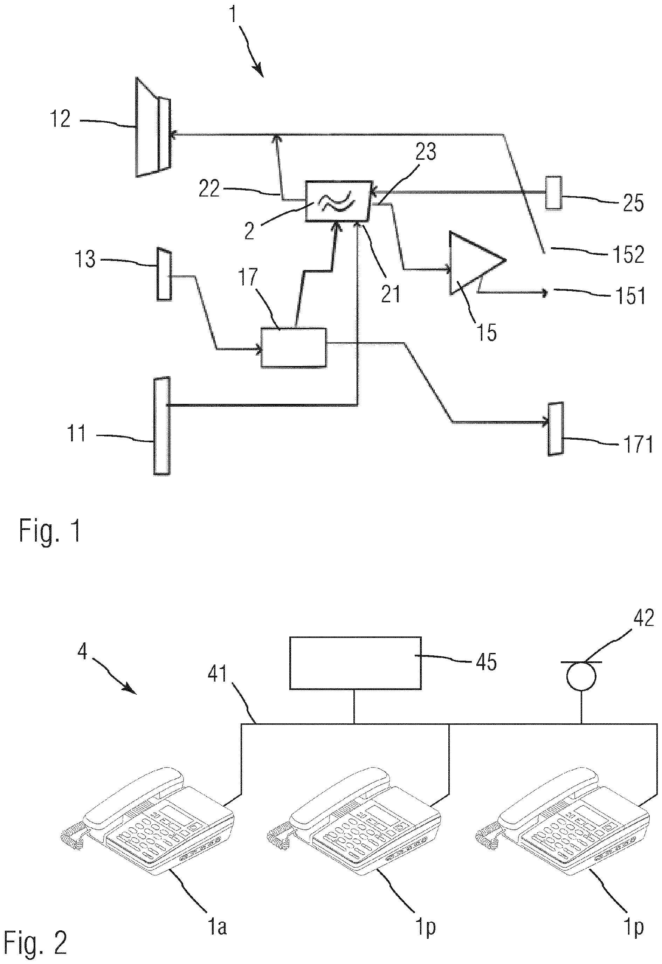

Anhand der Fig. 1 wird ein Blockschaltbild eines erfindungsgemäßen Sprachendgerätes erläutert. Fig. 1 zeigt ein erstes Mikrofon 11 und einen ersten Lautsprecher 12. Diese Elemente können beispielsweise in einem Headset oder einem Telefonhörer integriert sein, so dass der Benutzer des Sprachendgerätes einen entfernten Gesprächspartner über den ersten Lautsprecher 12 hört und seinerseits Sprachinformation über das erste Mikrofon 11 an den entfernten Gesprächspartner übermitteln kann. Hierzu können die vom ersten Mikrofon 11 empfangenen bzw. die vom ersten Lautsprecher 12 wiederzugebenden Signale über Anschlusskontakte 151 und 152 an eine nachfolgende, an sich bekannte Schaltung übergeben werden. Diese Schaltung kann eine A/D-Wandlung, eine D/A-Wandlung, eine Datenkompression und/oder weitere, an sich bekannte Schaltungselemente zum Rufaufbau und zur Rufsignalisierung und zur Datenübertragung enthalten. Fallweise können diese Komponenten auch zumindest teilweise als Software ausgeführt sein, welche auf einem Mikroprozessor ausgeführt wird und die entsprechenden Telefoniefunktionen bereitstellt.

Wie Fig. 1 weiter zeigt, wird das vom ersten Mikrofon 11 aufgenommene Signal über einen ersten Eingang 21 einem Echopfadverstärker 2 zugeführt. Das Signal wird um einen vorgebbaren Verstärkungsfaktor verstärkt oder abgeschwächt und über den Ausgang 22 an den ersten Lautsprecher 12 ausgegeben. Somit ist sichergestellt, dass der Benutzer über den ersten Lautsprecher 12 dasjenige mithört, was er gerade ins erste Mikrofon 11 spricht.

Weiterhin enthält das Sprachendgerät ein optionales zweites Mikrofon 13. Das zweite Mikrofon 13 kann beispielsweise in einem Wand- oder Tischgehäuse des Sprachendgerätes eingebaut sein oder als zusätzliches Element frei im Raum platziert werden. Das zweite Mikrofon 13 kann zumindest zeitweilig auch als Freisprechmikrofon Verwendung finden, so dass der Benutzer des Sprachendgerätes auch dann telefonieren kann, wenn er den Hörer nicht selbst in der Hand hält. Erfindungsgemäß wird vorgeschlagen, dass zumindest ein zweites Mikrofon 13 zur Erfassung der Umgebungslautstärke verwendet wird. Dies kann entweder das zweite Mikrofon 13 des aktiven Sprachendgerätes sein, welches aktuell in Benutzung ist. Alternativ oder zusätzlich können auch zweite Mikrofone 13 von Sprachendgeräten im selben Netzwerk verwendet werden, unabhängig davon, ob das jeweilige Sprachendgerät gerade verwendet wird oder nur im Wartezustand (passiv) befindlich ist. Im ersten Fall werden Umgebungsgeräusche durch das in Fig. 1 dargestellte zweite Mikrofon 13 aufgenommen und einer Einrichtung 17 zur Pegelbestimmung zugeführt. Der so bestimmte Pegel der Umgebungslautstärke kann dem Echopfadverstärker 2 über einen weiteren Eingang zugeführt werden, so dass die im Echopfadverstärker 2 angeordnete Einrichtung zur Bestimmung der Verstärkung die Verstärkung des Echopfadverstärkers in Echtzeit einstellen kann.

Im zweiten Fall werden Umgebungsgeräusche vom zweiten Mikrofon 13 aufgenommen und der Einrichtung zur Pegelbestimmung 17 zugeführt. Der so bestimmte Pegel wird sodann über den Ausgang 171 den weiteren Sprachendgeräten im Netzwerk zur Verfügung gestellt.

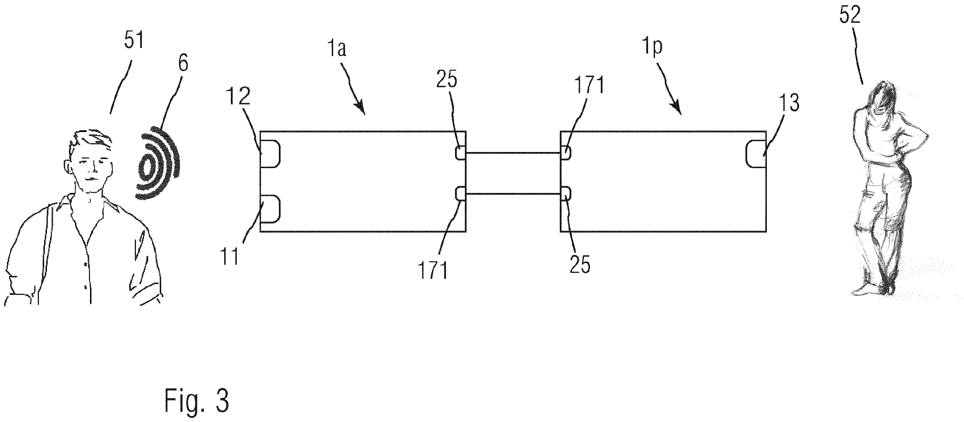

Bei Aufbau des Netzwerkes wird der Ausgang 171 eines ersten Sprachendgerätes mit dem Eingang 25 eines zweiten Sprachendgerätes verbunden, wie anhand der Fig. 3 ersichtlich ist. Somit wird ein die Umgebungslautstärke repräsentierendes Signal von einem ersten Sprachendgerät zu einem zweiten Sprachendgerät übertragen und dort von der Einrichtung zur Bestimmung der Verstärkung des Echopfadverstärkers 2 verwendet werden, um die Verstärkung des Echopfadverstärkers zu bestimmen und einzustellen. Je größer die Verstärkung des Echopfadverstärkers 2 ist, umso lauter hört der Benutzer im ersten Lautsprecher 12 dasjenige, was er in das erste Mikrofon 11 spricht.

Der Ausgang 171 und der Eingang 25 können in Form einer galvanischen oder einer Lichtleiterverbindung oder einer Funkverbindung ausgeführt sein. In anderen Ausführungsformen der Erfindung können diese Ein- und Ausgänge logische Schnittstellen sein, welchen entsprechende Datenpakete zugeführt werden, welche in dem die Sprachendgeräte verbindenden Netzwerk übertragen werden. Dabei kann es sich um dasjenige Netzwerk handeln, welches gleichzeitig auch zur Übertragung der Nutzdaten und zur Rufsignalisierung bzw. dem Rufaufbau verwendet wird.

In einigen Ausführungsformen der Erfindung kann das Sprachendgerät eine optionale Einrichtung 15 zur Ausgangspegelanpassung enthalten. Diese kann die im Echopfadverstärker 2 vorgenommene Verstärkung bzw. Abschwächung umkehren oder zumindest teilweise ausgleichen, so dass der entfernte Gesprächspartner des Benutzers des Sprachendgerätes unabhängig von der Verstärkung des Echopfadverstärkers 2 das Gespräch mit konstanter Lautstärke wahrnimmt.

Fig. 1 beschränkt sich auf wesentliche Merkmale der vorliegenden Erfindung. Dem Fachmann ist selbstverständlich geläufig, dass ein Sprachendgerät weitere Komponenten aufweisen kann, beispielsweise einen zweiten Lautsprecher, ein Display, ein Tastenfeld, eine Stromversorgung oder weitere, an sich bekannte Komponenten, welche in Figur 1 aus Gründen der Übersichtlichkeit nicht dargestellt sind.

Fig. 2 zeigt beispielhaft drei Sprachendgeräte 1a und 1p in einem Netzwerk 4. Das Netzwerk 4 besteht beispielhaft aus einer Kabelverbindung 41, welche dazu eingerichtet ist, analoge oder digitale Signale in an sich bekannter Weise zu übertragen. Alternativ oder zusätzlich kann auch eine Funkschnittstelle verwendet werden, beispielsweise eine an sich bekannte DECT- oder GSM- oder WLAN-Schnittstelle.

Die Kabelverbindung 41 des Netzwerkes 4 verbindet die Sprachendgeräte mit einer Telefonzentrale 45. Die Telefonzentrale 45 ist wiederum über eine nicht dargestellte Schnittstelle mit der Amtsleitung eines Telekommunikationsanbieters verbunden, so dass die Benutzer der Sprachendgeräte Gespräche untereinander aber auch mit entfernten Gesprächspartnern außerhalb des eigenen Gebäudes, außerhalb der eigenen Stadt oder außerhalb des eigenen Landes führen können.

Befinden sich mehrere Personen in einem Raum, so entsteht häufig der Konflikt, dass eine Person sehr lautstark in das erste Mikrofon 11 ihres Sprachendgerätes 1 spricht, so dass die übrigen Personen im Raum durch dieses Gespräch gestört werden. Erfindungsgemäß wird daher vorgeschlagen, die Sprechlautstärke nicht nur über das erste Mikrofon 11 sondern auch über zumindest ein zweites Mikrofon 13 oder 42 zu erfassen. Das zweite Mikrofon 13 kann im aktiven, d.h. im benutzten Sprachendgerät 1a angeordnet sein. Alternativ kann auch zumindest ein zweites Mikrofon 13 eines unbenutzten, d.h. passiven Sprachendgerätes 1p verwendet werden oder ein zweites Mikrofon 42, welches als separates Gerät im Raum platziert und mit dem Netzwerk 4 verbunden ist. In den letztgenannten Fällen wird die von dem zweiten Mikrofon 13 empfangene Umgebungslautstärke und/oder die Messwerte bzw. ein die Umgebungslautstärke oder die Messwerte repräsentierendes Signal über das Netzwerk 4 an das aktive Sprachendgerät 1a übermittelt und dort zur Regelung der Verstärkung des Echopfadverstärkers 2 verwendet, wie vorstehend beschrieben.

Anhand der Fig. 3 wird nochmals die Funktionsweise der vorliegenden Erfindung erläutert. Dargestellt sind schematisch ein aktives Sprachendgerät 1a und ein passives Sprachendgerät 1P. Dem Fachmann ist selbstverständlich geläufig, dass die Anzahl der Sprachendgeräte innerhalb eines Netzwerkes auch größer sein kann. Die Sprachendgeräte sind über ein Netzwerk miteinander verbunden wie vorstehend anhand der Fig. 2 erläutert wurde. Insbesondere ist der Ausgang 171 des passiven Sprachendgerätes 1p mit dem Eingang 25 des aktiven Sprachendgerätes 1a verbunden und der Ausgang 171 des aktiven Sprachendgerätes 1a ist mit dem Eingang 25 des passiven Sprachendgerätes 1p verbunden.

Für das nachfolgend beschriebene Ausführungsbeispiel soll angenommen werden, dass die beiden Sprachendgeräte 1a und 1p in einem Raum befindlich sind. Die Attribute "aktives" und "passives" Sprachendgerät beziehen sich nur auf die momentane Nutzung. Grundsätzlich kann es sich um baulich identische Sprachendgeräte handeln.

Im dargestellten Ausführungsbeispiel telefoniert der erste Benutzer 51 mit dem aktiven Sprachendgerät 1a. Dies bedeutet, dass er ein Sprachgeschehen von einem entfernten, in Fig. 3 nicht dargestellten Gesprächspartner über den ersten Lautsprecher 12 wahrnimmt und seinerseits in das erste Mikrofon 11 spricht, um diese Sprachsignale 6 zum entfernten Gesprächspartner zu übertragen. Wie vorstehend beschrieben, hört der erste Benutzer 51 über den ersten Lautsprecher 12 auch das, was er in das erste Mikrofon 11 spricht.

Sofern der erste Benutzer 51 sehr laut spricht, wird der zweite Benutzer 52 hiervon gestört. Um diese Störung zu reduzieren, wird das Sprachsignal zusammen mit dem Grundgeräusch im Raum vom zweiten Mikrofon 13 des passiven Sprachendgerätes 1p aufgezeichnet und das so generierte, das Umgebungsgeräusch repräsentierende Signal über die Schnittstelle 171 des passiven Sprachendgerätes 1p ausgegeben und vom Eingang 25 des aktiven Sprachendgerätes 1a empfangen.

Im aktiven Sprachendgerät 1a wird sodann die Verstärkung des Echopfadverstärkers 2 solange erhöht, bis der erste Benutzer 51 leiser spricht, so dass die Belästigung des zweiten Nutzers 52 entfällt oder zumindest reduziert ist.

Zur Bestimmung der Verstärkung des Echopfadverstärkers 2 wird die Umgebungslautstärke herangezogen. Die Umgebungslautstärke wird als Summe eines Grundgeräusches und eines Korrekturwertes erfasst. Die variable Verstärkung des Echopfadverstärkers 2 wird so eingestellt, dass der Korrekturwert unterhalb eines vorgebbaren Grenzwertes liegt. Der erste Grenzwert kann beispielsweise ≤ 3 dB sein. Optional kann auch die Umgebungslautstärke insgesamt zur Bestimmung der Verstärkung des Echopfadverstärkers herangezogen werden, wobei die Verstärkung so lange angehoben wird, bis die Umgebungslautstärke unterhalb eines zweiten Grenzwertes liegt. Der zweite Grenzwert kann beispielsweise ≤ 60 dB oder ≤ 55 dB oder ≤ 50 dB sein.

Um aus den Messwerten des zweiten Mikrofons 13 des passiven Sprachendgerätes 1p ein Grundgeräusch und einen Korrekturwert zu erfassen, können die Messwerte des zweiten Mikrofons 13 A-bewertet werden. Das Grundgeräusch kann sodann als fast-bewerteter energieäquivalenter Dauerpegel nach DIN 61672-1 bestimmt werden. Als Korrekturwert kann entweder die Differenz zwischen dem impuls-bewerteten Messwert und dem fast-bewerteten Messwert verwendet werden oder aber die Differenz zwischen den Perzentilpegeln P₉₀ und P₁₀.

Die erfindungsgemäß vorgeschlagene Bestimmung der Umgebungslautstärke orientiert sich somit am Beurteilungspegel nach DIN 61672. Abweichend hiervon wird für die Informationshaltigkeit des Schallsignals, welche sich aus dem Gespräch des ersten Benutzers 51 ergibt, jedoch kein qualitativ bestimmter Zuschlag als Korrekturwert verwendet, sondern ein objektiv aus den Messsignalen des zweiten Mikrofons 13 ermittelbarer Wert. Dies erlaubt die einfache Bestimmung des Umgebungsgeräusches mit technischen Mitteln ohne subjektive Beurteilung, wodurch das Verfahren vollständig automatisierbar wird. Völlig überraschend wurde erkannt, dass sich der Zuschlag für die Informationshaltigkeit des störenden Schallereignisses in einfacher Weise aus der Differenz des impuls- und des fast-bewerteten Messwertes ergibt.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Netzwerk (4) mit einer Mehrzahl von Sprachendgeräten (1), wobei jedes Sprachendgerät (1) aufweist:
zumindest ein erstes Mikrofon (11) und
zumindest ein zweites Mikrofon (13), welches dazu eingerichtet ist, eine Umgebungslautstärke zu erfassen,
zumindest einen ersten Lautsprecher (12) und
einen Echopfadverstärker (2) mit einem Eingang (21) und
einem Ausgang (22), wobei
das erste Mikrofon (11) mit dem Eingang (21) des Echopfadverstärkers (2) verbunden ist und
der erste Lautsprecher (12) mit dem Ausgang (22) des Echopfadverstärkers (2) verbunden ist, wobei der Echopfadverstärker (2) eine variable Verstärkung aufweist, **dadurch gekennzeichnet, dass**
das jedes Sprachendgerät (1) weiterhin zumindest eine Einrichtung zur Bestimmung der Verstärkung enthält, welche dazu eingerichtet ist, die variable Verstärkung des Echopfadverstärkers (2) in Abhängigkeit einer Umgebungslautstärke zu verändern, und wobei
das Netzwerk (4) zumindest zeitweise zumindest ein aktives Sprachendgerät (1a) der Mehrzahl von Sprachendgeräten (1) und zumindest ein passives Sprachendgerät (1p) der Mehrzahl von Sprachendgeräten (1) enthält, wobei das aktive Sprachendgerät dazu eingerichtet ist, dass die variable Verstärkung des Echopfadverstärkers (2) in Abhängigkeit der Umgebungslautstärke des zumindest einen passiven Sprachendgeräts (1p) verändert wird und wobei das passive Sprachendgerät (1p) dazu eingerichtet ist, mit zumindest dem zweiten Mikrofon (13) die Umgebungslautstärke zu erfassen.

2. Netzwerk nach einem der Anspruch 1, **dadurch gekennzeichnet, dass** jedes Sprachendgerät (1) weiterhin zumindest einen Eingang (25) enthält, über welchen ein die Umgebungslautstärke repräsentierendes Signal zuführbar ist.

3. Netzwerk nach einem der Ansprüche 1 bis 2, **dadurch gekennzeichnet, dass** die Einrichtung zur Bestimmung der Verstärkung dazu eingerichtet ist, die Umgebungslautstärke als Summe eines Grundgeräusches und eines Korrekturwertes zu erfassen und die variable Verstärkung des Echopfadverstärkers (2) so einzustellen, dass der Korrekturwert unterhalb eines vorgebbaren ersten Grenzwertes liegt und/oder
dass die Einrichtung zur Bestimmung der Verstärkung dazu eingerichtet ist, die Umgebungslautstärke als Summe eines Grundgeräusches und eines Korrekturwertes zu erfassen und die variable Verstärkung des Echopfadverstärkers (2) so einzustellen, dass der Korrekturwert unterhalb eines vorgebbaren ersten Grenzwertes und die Umgebungslautstärke unterhalb eines vorgebbaren zweiten Grenzwertes liegt.

4. Netzwerk nach Anspruch 3, **dadurch gekennzeichnet, dass** der vorgebbare erste Grenzwert ≤ 3 dB beträgt und/oder dass der vorgebbare zweite Grenzwert ≤ 55 dB beträgt und/oder
dass die Einrichtung zur Bestimmung der Verstärkung dazu eingerichtet ist, das Grundgeräusch als A-bewerteten und fast-bewerteten energieäquivalenten Dauerpegel nach DIN EN 61672-1 zu bestimmen.

5. Netzwerk nach einem der Ansprüche 3 oder 4, **dadurch gekennzeichnet, dass** als Korrekturwert die Differenz zwischen A-bewerteten und impuls-bewerteten Messwert und A-bewerteten und fast-bewerteten Messwert verwendet wird und/oder
dass als Korrekturwert die Differenz zwischen den Percentilpegeln P₉₀ und P₁₀ verwendet wird
und/oder
dass als Korrekturwert der "Speech Intelligibility Index" (SII) nach ANSI, S3.5, 1997 verwendet wird
und/oder
dass als Korrekturwert der psychoakustische Parameter der Schwankungsstärke verwendet wird.

6. Verfahren zur Regelung der Sprechlautstärke eines Benutzers eines Sprachendgerätes (1), welches zumindest ein erstes Mikrofon (11) und zumindest ein zweites Mikrofon (13) und zumindest einen ersten Lautsprecher (12) und einen Echopfadverstärker (2) mit einem Eingang (21) und einem Ausgang (22) enthält, wobei das erste Mikrofon (11) mit dem Eingang (21) des Echopfadverstärkers (2) verbunden ist und der Lautsprecher (12) mit dem Ausgang (22) des Echopfadverstärkers (2) verbunden ist, wobei der Echopfadverstärker (2) eine variable Verstärkung aufweist, und die variable Verstärkung des Echopfadverstärkers (2) in Abhängigkeit einer Umgebungslautstärke verändert wird,
**dadurch gekennzeichnet, dass**
eine Mehrzahl von Sprachendgeräten (1a, 1p) zu einem Netzwerk (4) verbunden ist, wobei die variable Verstärkung des Echopfadverstärkers (2) des Sprachendgeräts in Abhängigkeit der von zumindest einem zweiten Mikrofon eines zumindest einem passiven Sprachendgeräts (1p) der Mehrzahl von Sprachendgeräten (1a, 1p) erfassten Umgebungslautstärke verändert wird.

7. Verfahren nach Anspruch 6, **dadurch gekennzeichnet, dass** dem Sprachendgerät (1) über einen Eingang (23, 24) ein die Umgebungslautstärke repräsentierendes Signal zugeführt wird.

8. Verfahren nach einem der Ansprüche 6 oder 7 **dadurch gekennzeichnet, dass** die Umgebungslautstärke als Summe eines Grundgeräusches und eines Korrekturwertes erfasst wird und die variable Verstärkung des Echopfadverstärkers (2) so eingestellt wird, dass der Korrekturwert unterhalb eines vorgebbaren ersten Grenzwertes liegt und/oder dass die Umgebungslautstärke als Summe eines Grundgeräusches und eines Korrekturwertes erfasst wird und die variable Verstärkung des Echopfadverstärkers (2) so eingestellt wird, dass der Korrekturwert unterhalb eines vorgebbaren ersten Grenzwertes und die Umgebungslautstärke unterhalb eines vorgebbaren zweiten Grenzwertes liegt.

9. Verfahren nach Anspruch 8, **dadurch gekennzeichnet, dass** der vorgebbare erste Grenzwert ≤ 3 dB beträgt und/oder dass der vorgebbare zweite Grenzwert ≤ 55 dB beträgt und/oder
dass das Grundgeräusch als A-bewerteter und fast-bewerteter energieäquivalenter Dauerpegel nach DIN EN 61672-1 bestimmt wird.

10. Verfahren nach einem der Ansprüche 8 oder 9, **dadurch gekennzeichnet, dass** als Korrekturwert die Differenz zwischen A-bewerteten und impuls-bewerteten Messwert und A-bewerteten und fast-bewerteten Messwert verwendet wird und/oder
dass als Korrekturwert die Differenz zwischen den Percentilpegeln P₉₀ und P₁₀ verwendet wird
und/oder
dass als Korrekturwert der "Speech Intelligibility Index" (SII) nach ANSI, S3.5, 1997 verwendet wird
und/oder
dass als Korrekturwert der psychoakustische Parameter der Schwankungsstärke verwendet wird.

## Claims

1. Network (4) comprising a plurality of voice terminals (1),
each voice terminal (1) comprising:
at least a first microphone (11); and
at least a second microphone (13) designed to detect an ambient sound level,
at least a first loudspeaker (12) and
an echo path amplifier (2) having an input (21) and an output (22), the first microphone (11) being connected to the input (21) of the echo path amplifier (2), and
the first loudspeaker (12) being connected to the output (22) of the echo path amplifier (2),
the echo path amplifier (2) having a variable gain, **characterized in that**
each voice terminal (1) further contains at least one gain determining device designed to vary the variable gain of the echo path amplifier (2) depending on an ambient sound level, and wherein
the network (4) at least temporarily contains at least one active voice terminal (1a) of the plurality of voice terminals (1) and at least one passive voice terminal (1p) of the plurality of voice terminals (1), the active voice terminal being designed to vary the variable gain of the echo path amplifier (2) depending on the ambient sound level of the at least one passive voice terminal (1p), and the passive voice terminal (1p) being designed to detect the ambient sound level with at least the second microphone (13).

2. Network according to claim 1, **characterized in that** each voice terminal (1) further contains at least one input (25) via which a signal representing the ambient sound level can be supplied.

3. Network according to any one of claims 1 to 2, **characterized in that** the gain determining device is designed to detect the ambient sound level as the sum of a background noise and a correction value and to set the variable gain of the echo path amplifier (2) in such a way that the correction value is below a predeterminable first limit value, and/or
**in that** the gain determining device is designed to detect the ambient sound level as the sum of a background noise and a correction value and to set the variable gain of the echo path amplifier (2) in such a way that the correction value is below a predeterminable first limit value and the ambient sound level is below a predeterminable second limit value.

4. Network according to claim 3, **characterized in that** the predeterminable first limit value is ≤ 3 dB and/or
**in that** the predeterminable second limit value is ≤ 55 dB and/or
**in that** the gain determining device is designed to determine the background noise as an A-weighted and almost-weighted energy-equivalent long-term level in accordance with DIN EN 61672-1.

5. Network according to any one of claims 3 and 4, **characterized in that** the difference between A-weighted and pulse-weighted measured value and A-weighted and almost-weighted measured value is used as a correction value, and/or
**in that** the difference between the P₉₀ and P₁₀ percentile levels is used as a correction value, and/or
**in that** the speech intelligibility index (SII) according to ANSI, S3.5, 1997 is used as a correction value and/or
**in that** the psychoacoustic parameter of the fluctuation intensity is used as a correction value.

6. Method for controlling the speech volume of a user of a voice terminal (1) containing at least a first microphone (11) and at least a second microphone (13) and at least a first loudspeaker (12) and an echo path amplifier (2) having an input (21) and an output (22), the first microphone (11) being connected to the input (21) of the echo path amplifier (2) and the loudspeaker (12) being connected to the output (22) of the echo path amplifier (2), the echo path amplifier (2) having a variable gain, and the variable gain of the echo path amplifier (2) being varied depending on an ambient sound level,
**characterized in that**
a plurality of voice terminals (1a, 1p) are connected to a network (4), the variable gain of the echo path amplifier (2) of the voice terminal being varied depending on the ambient sound level detected by at least a second microphone of at least one passive voice terminal (1p) of the plurality of voice terminals (1a, 1p).

7. Method according to claim 6, **characterized in that** a signal representing the ambient sound level is supplied to the voice terminal (1) via an input (23, 24).

8. Method according to any one of claims 6 and 7, **characterized in that** the ambient sound level is detected as the sum of a background noise and a correction value, and the variable gain of the echo path amplifier (2) is set such that the correction value is below a predeterminable first limit value, and/or
**in that** the ambient sound level is detected as the sum of a background noise and a correction value, and the variable gain of the echo path amplifier (2) is set in such a way that the correction value is below a predeterminable first limit value and the ambient sound level is below a predeterminable second limit value.

9. Method according to claim 8, **characterized in that** the predeterminable first limit value is ≤ 3 dB and/or
**in that** the predeterminable second limit value is ≤ 55 dB and/or in that the background noise is determined as an A-weighted and almost-weighted energy-equivalent long-term level in accordance with DIN EN 61672-1.

10. Method according to any one of claims 8 and 9, **characterized in that** the difference between A-weighted and pulse-weighted measured value and A-weighted and almost-weighted measured value is used as a correction value and/or
**in that** the difference between the P₉₀ and P₁₀ percentile levels is used as a correction value and/or
**in that** the speech intelligibility index (SII) according to ANSI, S3.5, 1997 is used as a correction value and/or
**in that** the psychoacoustic parameter of the fluctuation intensity is used as a correction value.

## Revendications

1. Réseau (4) comprenant une pluralité de terminaux vocaux (1), chaque terminal vocal (1) comprenant :
au moins un premier microphone (11), et
au moins un deuxième microphone (13) qui est conçu pour détecter un volume sonore ambiant,
au moins un premier haut-parleur (12), et
un amplificateur de chemin d'écho (2) ayant une entrée (21) et une sortie (22),
dans lequel
le premier microphone (11) est relié à l'entrée (21) de l'amplificateur de chemin d'écho (2), et
le premier haut-parleur (12) est relié à la sortie (22) de l'amplificateur de chemin d'écho (2),
l'amplificateur de chemin d'écho (2) présente un gain variable,
**caractérisé en ce que**
chaque terminal vocal (1) comprend en outre au moins un dispositif de détermination du gain, qui est conçu pour modifier le gain variable de l'amplificateur de chemin d'écho (2) en fonction d'un volume sonore ambiant, et
le réseau (4) comprend au moins temporairement au moins un terminal vocal actif (1a) parmi la pluralité de terminaux vocaux (1) et au moins un terminal vocal passif (1p) parmi la pluralité de terminaux vocaux (1), le terminal vocal actif étant conçu pour que le gain variable de l'amplificateur de chemin d'écho (2) soit modifié en fonction du volume sonore ambiant dudit au moins un terminal vocal passif (1p), et le terminal vocal passif (1p) étant conçu pour détecter le volume sonore ambiant à l'aide au moins du deuxième microphone (13).

2. Réseau selon la revendication 1,
**caractérisé en ce que** chaque terminal vocal (1) comprend en outre au moins une entrée (25) permettant d'acheminer un signal représentant le volume sonore ambiant.

3. Réseau selon l'une des revendications 1 à 2,
**caractérisé en ce que** le dispositif de détermination du gain est conçu pour détecter le volume sonore ambiant en tant que somme d'un bruit de fond et d'une valeur de correction et pour régler le gain variable de l'amplificateur de chemin d'écho (2) de telle sorte que la valeur de correction soit inférieure à une première valeur limite prédéfinissable,
et/ou
**en ce que** le dispositif de détermination du gain est conçu pour détecter le volume sonore ambiant en tant que somme d'un bruit de fond et d'une valeur de correction et pour régler le gain variable de l'amplificateur de chemin d'écho (2) de telle sorte que la valeur de correction soit inférieure à une première valeur limite prédéfinissable et que le volume sonore ambiant soit inférieur à une deuxième valeur limite prédéfinissable.

4. Réseau selon la revendication 3,
**caractérisé en ce que** la première valeur limite prédéfinissable est ≤ 3 dB, et/ou
**en ce que** la deuxième valeur limite prédéfinissable est ≤ 55 dB,
et/ou
**en ce que** le dispositif de détermination du gain est conçu pour déterminer le bruit de fond en tant que niveau continu équivalent à pondération A et à pondération Fast selon la norme DIN EN 61672-1.

5. Réseau selon l'une des revendications 3 ou 4,
**caractérisé en ce que** l'on utilise comme valeur de correction la différence entre la valeur de mesure à pondération A et à pondération impulsionnelle et la valeur de mesure à pondération A et à pondération Fast,
et/ou
**en ce que** l'on utilise comme valeur de correction la différence entre les niveaux de percentile P₉₀ et P₁₀,
et/ou
**en ce que** l'on utilise comme valeur de correction l'indice d'intelligibilité de la parole ("Speech Intelligibility Index") (SII) selon ANSI, S3.5, 1997,
et/ou
**en ce que** l'on utilise comme valeur de correction le paramètre psychoacoustique de la variabilité.

6. Procédé de régulation du volume de la parole d'un utilisateur d'un terminal vocal (1), qui comprend au moins un premier microphone (11) et au moins un deuxième microphone (13) et au moins un premier haut-parleur (12) et un amplificateur de chemin d'écho (2) ayant une entrée (21) et une sortie (22), le premier microphone (11) étant relié à l'entrée (21) de l'amplificateur de chemin d'écho (2), et le haut-parleur (12) étant relié à la sortie (22) de l'amplificateur de chemin d'écho (2), l'amplificateur de chemin d'écho (2) présentant un gain variable, et le gain variable de l'amplificateur de chemin d'écho (2) étant modifié en fonction d'un volume sonore ambiant,
**caractérisé en ce que**
une pluralité de terminaux vocaux (1a, 1p) est connectée en un réseau (4), le gain variable de l'amplificateur de chemin d'écho (2) du terminal vocal étant modifié en fonction du volume sonore ambiant détecté par au moins un deuxième microphone d'au moins un terminal vocal passif (1p) parmi la pluralité de terminaux vocaux (1a, 1p).

7. Procédé selon la revendication 6,
**caractérisé en ce qu'**un signal représentatif du volume sonore ambiant est acheminé au terminal vocal (1) via une entrée (23, 24).

8. Procédé selon l'une des revendications 6 ou 7,
**caractérisé en ce que** le volume sonore ambiant est détecté en tant que somme d'un bruit de fond et d'une valeur de correction, et le gain variable de l'amplificateur de chemin d'écho (2) est réglé de telle sorte que la valeur de correction soit inférieure à une première valeur limite prédéfinissable,
et/ou
**en ce que** le volume sonore ambiant est détecté en tant que somme d'un bruit de fond et d'une valeur de correction, et le gain variable de l'amplificateur de chemin d'écho (2) est réglé de telle sorte que la valeur de correction soit inférieure à une première valeur limite prédéfinissable et le volume sonore ambiant soit inférieur à une deuxième valeur limite prédéfinissable.

9. Procédé selon la revendication 8,
**caractérisé en ce que** la première valeur limite prédéfinissable est ≤ 3 dB, et/ou
**en ce que** la deuxième valeur limite prédéfinissable est ≤ 55 dB,
et/ou
**en ce que** le bruit de fond est déterminé en tant que niveau continu équivalent à pondération A et à pondération Fast selon la norme DIN EN 61672-1.

10. Procédé selon l'une des revendications 8 ou 9,
**caractérisé en ce que** l'on utilise comme valeur de correction la différence entre la valeur de mesure à pondération A et à pondération impulsionnelle et la valeur de mesure à pondération A et à pondération Fast,
et/ou
**en ce que** l'on utilise comme valeur de correction la différence entre les niveaux de percentile P₉₀ et P₁₀,
et/ou
**en ce que** l'on utilise comme valeur de correction l'indice d'intelligibilité de la parole ("Speech Intelligibility Index") (SII) selon ANSI, S3.5, 1997,
et/ou
**en ce que** l'on utilise comme valeur de correction le paramètre psychoacoustique de la variabilité.
